# EUROPÄISCHE PATENTSCHRIFT

(11) **EP 3 334 574 B1**
(45) Veröffentlichungstag und Bekanntmachung des Hinweises auf die Patenterteilung: **10.03.2021**
(21) Anmeldenummer: 16757173.6
(22) Anmeldetag: 10.08.2016
(51) Int. Cl.: B25J 13/08, B25J 17/02

(54) **ROBOTERARM UND ROBOTERHANDGELENK**
ROBOT ARM AND ROBOT WRIST
BRAS DE ROBOT ET POIGNET DE ROBOT

(30) Priorität: 14.08.2015 DE 102015113467
(43) Veröffentlichungstag der Anmeldung: 20.06.2018
(73) Patentinhaber: Franka Emika GmbH, 80797 München (DE)
(72) Erfinder: HADDADIN, Sami, 30173 Hannover (DE)
(74) Vertreter: Rösler Rasch van der Heide & Partner
(86) Internationale Anmeldenummer: PCT/EP2016/069060
(87) Internationale Veröffentlichungsnummer: WO 2017/029170

(56) Entgegenhaltungen:
- EP-A1- 2 862 679
- EP-A2- 2 792 456
- JP-A- 2008 272 883
- JP-A- 2012 228 761
- US-A- 5 016 489
- US-A1- 2011 107 866
- US-A1- 2012 143 353
- US-A1- 2014 245 856
- US-B1- 6 267 022
- Etienne Dombre ET AL: "QuelquesProblèmes de Conception et Commande de Robots Médicaux", , 1. Januar 2003 (2003-01-01), Seiten 559-563, XP055319993, DOI: 10.1016/j.mecind.2003.07.002> Gefunden im Internet: URL:https://hal.archives-ouvertes.fr/lirmm -00191944/document [gefunden am 2016-11-16]
- Chablat Damien: "Pages perso de Damien Chablat", , 1. September 2007 (2007-09-01), XP055320001, Gefunden im Internet: URL:http://www.irccyn.ec-nantes.fr/~chabla t/Seriel.html [gefunden am 2016-11-16]

## Beschreibung

Die Erfindung betrifft einen Roboterarm mit mehreren Armgliedern, die jeweils über aktorisch antreibbare Gelenkverbindungen verbunden sind, wobei das proximale Armglied des Roboterarms über eine Gelenkverbindung mit einem Roboterkörper und das distale Armglied des Roboterarms über eine Gelenkverbindung mit einem montierbaren Effektor verbindbar ist. Zumindest die letzten drei Gelenkverbindungen des distalen Endes des Roboterarms erlauben jeweils eine Drehung um eine Drehachse. Derartige Roboterarme sind im Stand der Technik bekannt.

Die Erfindung betrifft weiterhin ein Roboterhandgelenk mit drei aktorisch antreibbaren Handgelenkverbindungen, die über zwei Handgelenkglieder seriell verbunden sind, wobei das proximale Handgelenkglied des Roboterhandgelenks über eine der Handgelenkverbindungen mit einem Roboterarm verbindbar ist, das distale Handgelenkglied des Roboterhandgelenks über eine weitere der Handgelenkverbindungen mit einem Effektor verbindbar ist, und jede der drei Handgelenkverbindungen eine Bewegung um eine zugeordnete Handgelenkrotationsachse erlaubt. Derartige Roboterhandgelenke sind im Stand der Technik ebenfalls bekannt.

Die Erfindung betrifft schließlich einen Roboter mit einem Roboterarm oder einen Roboterhandgelenk

Ein Beispiel für einen solchen Roboter findet sich in der Publikation Etienne Dombre ET AL: "QuelquesProblèmes de Conception et Commande de Robots Médicaux", 1. Januar 2003 (2003-01-01), Seiten 559-563

Die Aufgabe der Erfindung ist es, den Roboterarm oder das Roboterhandgelenk derart auszugestalten, dass die Handhabung des Roboterarms/des Roboterhandgelenks, insbesondere für Manipulationen von Objekten oder der Umgebung über/auf einer Arbeitsfläche verbessert wird.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Zur Lösung eines ersten Aspekts der Aufgabe wird ein Roboterarm mit einer Anzahl N von aktorisch antreibbaren Gelenkverbindungen GVₙ, die über Armglieder GLᵢ seriell verbunden sind, mit n = 1, 2, ..., N, und i = 1, 2, ..., N-1, und N ≥ 6 vorgeschlagen, wobei das proximale Armglied GL₁ des Roboterarms über die Gelenkverbindung GV₁ mit einem Roboterkörper verbindbar ist, das distale Armglied GL_{N-1} des Roboterarms über die Gelenkverbindung GV_{N} mit einem Effektor E verbindbar ist, die Armglieder GL_{N-1} und GL_{N- 2} über die Gelenkverbindung GV_{N-1} und die Armglieder GL_{N-2} und GL_{N-3} über die Gelenkverbindung GV_{N-2}, verbunden sind, und jede der Gelenkverbindungen GV_{N}, GV_{N-1}, GV_{N-2} eine Bewegung um eine zugeordnete Rotationsachse R_{GV,N}, R_{GV,N-1}, R_{GV,N-2} erlaubt.

Die distalen Gelenkverbindungen GV_{N}, GV_{N-1}, GV_{N-2} mit den Gelenkverbindungen GL_{N-2}, GL_{N-1} bilden quasi ein "Handgelenk", das relativ zu den vorherigen Gelenken GL_{N-3} ... eine Ausrichtung des Effektors E in drei Freiheitsgraden ermöglicht.

Der vorgeschlagene Roboterarm zeichnet sich dadurch aus, dass der Roboterarm derart ausgeführt ist, dass sich die Rotationsachsen R_{GV,N-2} und R_{GV,N-1} in einem Winkel im Bereich von 50 bis 130° schneiden, die Rotationsachse R_{GV,N} radial in einem konstanten Abstand D1 zur Rotationsachse R_{GV,N-1} angeordnet ist, und in der Gelenkverbindung GV_{N-1} zur Erfassung einer Kraft oder eines Drehmoments um Rotationsachse R_{GV,N-1} (bzw. das effektiv wirkende Drehmoment um die Achse) eingerichtet ist..

Der Winkelbereich in dem sich die Rotationsachsen R_{GV,N-2} und R_{GV,N-1} schneiden beträgt bevorzugt 50 bis 130°,60 bis 120°, 70 bis 110°, 80 bis 100° oder 85 bis 95°.

Zur Erfassung der Kraft oder des Drehmoments kann ein an sich bekannter abtriebsseitiger Kraft- oder Drehmomentssensor vorhanden sein. Der Sensor kann aber auch als Direktantrieb (direct-drive) ausgeführt sein. In letzterem Fall kann der Direktantrieb gleichzeitig Antrieb und Sensor sein. Das Drehmoment wird typischerweise durch die Motorstrommessung in Kombination mit bekannten physikalischen Zusammenhängen geschätzt. Eine Kombination beider ist jedoch explizit nicht ausgeschlossen (Direct drive und abtriebsseitiger Sensor, um wirkende interne und externe Kräfte noch genauer zu messen).

Das Ziel ist es hier, über den wirkenden Hebel eine verbesserte Sensitivität gegenüber wirkenden Drehmomenten und Kräften, insbesondere gegenüber wirkenden Kontaktkräften herzustellen.

Vorteilhaft ist die Anzahl N gleich 6 oder 7 oder 8. Besonders bevorzugt ist N gleich 7. Der Roboterarm ist in letzterem Fall (N = 7) mit dem proximalen Armglied GL₁ über die auch aktorisch antreibbare Gelenkverbindung GV₁ mit dem Roboterkörper verbunden, so dass der Roboterarm inklusive dem Effektor E insgesamt um 7 Achsen R_{GV1}, R_{GV2}, R_{GV3}, R_{GV4}, R_{GV5}, R_{GV6}, und R_{GV7} steuerbar ist. Die drei distalen Gelenkverbindungen GV₅, GV₆, GV₇ mit den Rotationsachsen R_{GV5}, R_{GV6} und R_{GV7} und die Armglieder GL₅, und GL₆ mit dem Effektor E können zusammengenommen als eine Art "Handgelenk" aufgefasst werden. Der 7-achsige (N=7) Roboterarm ermöglicht die dreidimensionale Positionierung und die dreidimensionale Orientierung des Endeffektors E im Arbeitsraum des Roboters. Das bedeutet, der Roboterarm verfügt über einen Arbeitsraum, in dem sein Effektor E jeden Raumpunkt in beliebiger Orientierung erreichen kann.

Vorteilhaft sind die proximalen Armglieder (bspw. für N = 6: GL₁, GL₂ und GL₃) zur dreidimensionalen Positionierung des Effektors E im Arbeitsraum lange Armglieder, um den Effektor E in einem möglichst großen Arbeitsraum positionieren zu können. Vorteilhaft sind die distalen Armglieder (bspw. für N = 6: GL₄, GL₅ und GL₆) kurze Armglieder, um den Effektor E in einem kleinen Raumbereich in eine gewünschte Orientierung zu bringen.

Der Effektor (= Werkzeug) E kann je nach Aufgabe und Anforderung aus einer Vielzahl von Werkzeugen, bspw. Greifer, Schweißkanone, Schweißzange, Klebstoffdüse, Lackierdüse, Bohr/Fräskopf, Messwerkzeug, Laserschneidkopf, Wasserstrahlschneidkopf, etc. ausgewählt werden. Der Effektor E kann unmittelbar mit der Gelenkverbindung GV_{N} oder über ein (starres) Zwischenstück bspw. einen Adapter mit der Gelenkverbindung GV_{N} verbunden sein. Das Zwischenstück kann als weiteres Armglied ausgestaltet sein.

Der vorgeschlagene Roboterarm weist mehrere Vorteile auf. Durch die Abstände D1 und A1 ergeben sich Hebel, durch die ein verbessertes Messen von externen Kräften bzw. Drehmomenten in nahezu allen Konfigurationen der Gelenkwinkelverbindungen ermöglicht wird. So ermöglicht der Abstand D1 ein Erkennen von externen Kräften bzw. Drehmomenten mittels des in der Gelenkverbindung GV_{N-1} vorhandenen Sensors auch dann, wenn eine Kraft entlang der Rotationsachse R_{GV,N} wirkt. Auch ein Erkennen von externen Drehmomenten um Rotationsachse R_{GV,N} ist möglich. Weiterhin ergeben sich bei dem vorgeschlagenen Roboterarm keine klassischen Singularitäten bei der Erfassung von externen Drehmomenten oder Kräften im Handgelenk (= distale Gelenkverbindungen GV_{N}, GV_{N-1}, GV_{N-2} mit den Armgliedern GL_{N-2}, GL_{N-1} und dem Effektor E), da sich die letzten beiden Rotationsachsen R_{GV,N-1} und R_{GV,N} nicht schneiden. Ein weiterer Vorteil betrifft eine Re-Konfiguration des Handgelenks. Diese ist größtenteils durch Bewegung des Handgelenks allein möglich, so dass nicht der gesamte Roboterarm bewegt werden muss.

Eine Bewegung des Roboterarms mit Effektor E um den sogenannten Tool-Center-Punkt (TCP = ein Referenzpunkt, der an geeigneter Stelle am Werkzeug/Effektor definiert ist) ist insbesondere in allen Roboterarmkonfigurationen vorteilhaft möglich, wenn sich Rotationsachsen R_{GV,N-2} und R_{GV,N} schneiden. Auch wenn kein Schnittpunkt vorhanden ist gilt, je näher Rotationsachsen R_{GV,N-2} und R_{GV,N} in einer aktuellen Roboterarmkonfiguration zueinander angeordnet sind, desto einfacher ist die Rotation um den Tool-Center-Punkt ausführbar.

Betrachtet man Einsatzszenarios des Roboterarms bei denen in einer nahen Umgebung des Roboterkörpers (innerhalb des Arbeitsbereichs des Roboters) mit dem Roboterarm inklusive Effektor E Handhabungen eines Objekts auf/über einer Arbeitsfläche (bspw. einer Tischfläche) ausgeführt werden sollen, dann ermöglicht der vorgeschlagene Roboterarm vorteilhaft eine einfache Rotation um den Tool-Center-Punkt. Das bedeutet, dass diese Rotation größtenteils durch Bewegung des Handgelenks allein möglich ist, so dass nicht der gesamte Roboterarm für eine gewünschte Bewegung im Aufgabenraum bewegt werden muss.

Insgesamt ermöglicht das "Handgelenk" des vorgeschlagenen Roboterarms bzw. der gesamte Roboterarm durch die effektive Projektion der externen Kräfte und Momente in die Gelenkdrehmomente eine bessere Erfassung einwirkender externer Kräfte und Momente, insbesondere bei einer manuellen Führung des Handgelenks bspw. zur direkten Eingabe (Vormachen, Teachen) von Bewegungsabläufen, eine bessere Handhabung von Objekten, insbesondere bei Arbeiten auf/über einer Arbeitsfläche, und schließlich eine bessere und feinere Steuerung von Objekt-Manipulationen und zur Kollisionsvermeidung des Roboterarms mit Objekten einer Umgebung.

Eine vorteilhafte Weiterbildung des Roboterarms zeichnet sich dadurch aus, dass der Roboterarm derart ausgeführt ist, dass in jeder Roboterarmkonfiguration eine Projektion der Rotationsachse R_{GV,N} (= projizierte Rotationsachse R_{GV,N}*) auf eine durch Rotationsachsen R_{GV,N-2} und R_{GV,N-1} aufgespannte Ebene mit der Rotationsachse R_{GV,N-1} einen Winkel im Bereich von 50 bis 130° zueinander einschließen.

Eine vorteilhafte Weiterbildung des Roboterarms zeichnet sich dadurch aus, dass die Rotationsachse R_{GV,N-2} und die Rotationsachse R_{GV,N-1} einen Winkel von 90° einschließen, und/oder dass die Projektion der Rotationsachse R_{GV,N} (= projizierte Rotationsachse R_{GV,N}*) auf die durch Rotationsachsen R_{GV,N-2} und R_{GV,N-1} aufgespannte Ebene mit der Rotationsachse R_{GV,N-1} einen Winkel von 90° einschließt. Vorteilhaft gelten für die angegebenen Winkel, insbesondere dem Winkel von 90° Toleranzen von ± 2° oder von ± 5°.

Eine vorteilhafte Weiterbildung des Roboterarms zeichnet sich dadurch aus, dass der Abstand D1 im Bereich von 10 mm bis 50 cm gewählt ist, und vorteilhaft 15 mm, 20 mm, 50 mm, 75 mm, 1 cm, 5 cm, 10 cm, 15 cm, 20 cm, 25 cm, 30 cm, 35 cm, 40 cm, oder 45 cm beträgt.

Eine vorteilhafte Weiterbildung des Roboterarms zeichnet sich dadurch aus, dass die Rotationsachsen R_{GV,N-2} und R_{GV,N-1} einen Winkel von 90° einschließen und/oder die Projektion der Rotationsachse R_{GV,N} auf die durch Rotationsachsen R_{GV,N-2} und R_{GV,N-1} aufgespannte Ebene mit der Rotationsachse R_{GV,N-1} einen Winkel von 90° einschließen.

Eine vorteilhafte Weiterbildung des Roboterarms zeichnet sich dadurch aus, dass der Abschnitt des Roboterarms umfassend die Gelenkverbindungen GV_{N-2}, GV_{N-1} und GV_{N}, die Armglieder GL_{N-2} und GL_{N-1} sowie der an die Gelenkverbindung GV_{N} montierte Effektor E derart ausgebildet ist, dass eine Bewegung der Armglieder GL_{N-1} und des Effektors E um die Rotationsachse R_{GV,N-1} in jeder beliebigen Pose ungehindert möglich ist.

Eine vorteilhafte Weiterbildung des Roboterarms zeichnet sich dadurch aus, dass die Gelenkverbindung GV_{N} einen Sensor zur Erfassung einer Kraft oder eines Drehmoments um Rotationsachse R_{GV,N} aufweist und/oder die Gelenkverbindung GV_{N-2} einen Sensor zur Erfassung einer Kraft oder eines Drehmoments um Rotationsachse R_{GV,N-2} aufweist. Besonders vorteilhaft sind alle Gelenkverbindungen GVₙ zur Erfassung von Kräften und/oder Drehmomenten um die jeweilige Rotationsachse R_{GVn} ausgeführt. Dies ermöglicht eine genauere Erfassung der dynamisch wirkenden internen und externen Kräfte und Momente des Roboterarms, was bspw. eine Steuerung des Roboterarms und eine Kollisionserkennung entlang des Roboterarms beispielsweise unter Zuhilfenahme entsprechender modellbasierter Schätzmethoden verbessert.

Eine vorteilhafte Weiterbildung des Roboterarms zeichnet sich dadurch aus, dass der Roboterarm derart ausgeführt ist, dass sich die Rotationsachsen R_{GV1} und R_{GV2} in einem Winkel im Bereich von 50 bis 130° schneiden, sich die Rotationsachsen R_{GV2} und R_{GV3} in einem Winkel im Bereich von 50 bis 130° schneiden, die Rotationsachse R_{GV4} radial in einem konstanten Abstand D2 zur Rotationsachse R_{GV3} angeordnet ist, und sich die Rotationsachsen R_{GV4} und R_{GV5} in einem Winkel im Bereich von 50 bis 130° schneiden.

Eine vorteilhafte Weiterbildung des Roboterarms zeichnet sich dadurch aus, dass der Roboterarm derart ausgeführt ist, dass sich die Rotationsachsen R_{GV1} und R_{GV2} in einem Winkel im Bereich von 50 bis 130° schneiden, sich die Rotationsachsen R_{GV2} und R_{GV3} in einem Winkel im Bereich von 50 bis 130° schneiden, sich die Rotationsachsen R_{GV3} und R_{GV4} in einem Winkel im Bereich von 50 bis 130° schneiden, die Rotationsachse R_{GV5} radial in einem Abstand D3 zur Rotationsachse R_{GV4} angeordnet ist.

Eine vorteilhafte Weiterbildung des Roboterarms zeichnet sich dadurch aus, dass der Roboterarm derart ausgeführt ist, dass sich die Rotationsachsen R_{GV1} und R_{GV2} in einem Winkel im Bereich von 50 bis 130° schneiden, sich die Rotationsachsen R_{GV2} und R_{GV3} in einem Winkel im Bereich von 50 bis 130° schneiden, die Rotationsachse R_{GV4} radial in einem konstanten Abstand D4 zur Rotationsachse R_{GV3} angeordnet ist, die Rotationsachse R_{GV5} radial in einem Abstand D5 zur Rotationsachse R_{GV4} angeordnet ist.

Die vorstehenden Weiterbildungen betreffen insbesondere die bauliche Ausgestaltung des Roboterarms beginnend von seinem proximalen Ende her. Die vorstehend vorgeschlagenen unterschiedlichen baulichen Varianten des Roboterarms sind je nach Einsatzzweck und Aufgabenstellung auszuwählen und ermöglichen eine optimale Erfassung entlang des Roboterarms einwirkender externer Kräfte und Drehmomente, sowie eine feinfühlige Ausführung von Bewegungen.

Die Erfindung betrifft gemäß des zweiten Aspekts der Aufgabe ein Roboterhandgelenk mit drei aktorisch antreibbaren Handgelenkverbindungen HGVₙ, die über zwei Handgelenkglieder HGLᵢ seriell verbunden sind, mit n = 1, 2, 3 und i = 1, 2, wobei das proximale Handgelenkglied HGL₁ des Roboterhandgelenks über die Handgelenkverbindung HGV₁ mit einem Roboterarm verbindbar ist, das distale Handgelenkglied HGL₂ des Roboterhandgelenks über die Handgelenkverbindung HGV₃ mit einem Effektor E verbindbar ist, die Handgelenkglieder HGL₂ und HGL₁ über die Handgelenkverbindung HGV₂ verbunden sind, und jede der Handgelenkverbindungen HGV₁, HGV₂, HGV₃ eine Bewegung um eine zugeordnete Handgelenkrotationsachse HR_{GV,1}, HR_{GV,2}, HR_{GV,3} erlaubt.

Das vorgeschlagene Roboterhandgelenk zeichnet sich dadurch aus, dass das Roboterhandgelenk derart ausgeführt ist, dass sich die Handgelenkrotationsachsen HR_{HGV,1} und HR_{HGV,2} in einem Winkel im Bereich von 50 bis 130° schneiden, die Handgelenkrotationsachse HR_{HGV,3} radial in einem konstanten Abstand D1 zur Handgelenkrotationsachse HR_{HGV,2} angeordnet ist, und in der Handgelenkverbindung HGV₂ ein Sensor zur Erfassung einer Kraft oder eines Drehmoments um Handgelenkrotationsachse HR_{HGV,2} vorhanden ist.

Das vorgeschlagene Roboterhandgelenk erlaubt eine dreidimensionale Orientierung des Effektors E. Ein mit dem Roboterhandgelenk verbindbarer Roboterarm erlaubt zudem eine dreidimensionale Positionierung des Handgelenks bzw. des Effektors E in einem Arbeitsbereich des Roboters (Roboterarm und Roboterhandgelenk und Effektor E). Das Roboterhandgelenk, bestehend aus den distalen drei Handgelenkverbindungen, ermöglicht feinfühlige Interaktion mit Menschen und/oder Objekten bzw. die Handhabung von Objekten, wobei das Handgelenk durch die erfindungsgemäße Anordnung der Handgelenkrotationsachsen und einer vorteilhaft im Handgelenk vorhandenen Sensorik derart ausgelegt ist, dass einerseits ein feinfühliges Erkennen von externen Kräften/Drehmomenten um alle der drei Achsen möglich ist, und überdies ein hoher Grad an Beweglichkeit größtenteils allein durch die einfache Re-Konfiguration des Handgelenks möglich ist, wobei beide Eigenschaften zur Handhabung von Objekten in einem Arbeitsraum auf/über bspw. einer Tischarbeitsfläche besonders gut genutzt werden können.

Eine vorteilhafte Weiterbildung des Roboterhandgelenks zeichnet sich dadurch aus, dass das Roboterhandgelenk derart ausgeführt ist, dass eine Projektion der Handgelenkrotationsachse HR_{HGV,3} auf eine durch die Handgelenkrotationsachsen HR_{HGV,1} und HR_{HGV,2} aufgespannte Ebene mit der Handgelenkrotationsachse HR_{HGV,2} einen Winkel im Bereich von 50 bis 130° zueinander einschließen.

Eine vorteilhafte Weiterbildung des Roboterhandgelenks zeichnet sich dadurch aus, dass das Roboterhandgelenk derart ausgeführt ist, dass die Handgelenkrotationsachsen HR_{HGV,1} und HR_{HGV,2} einen Winkel von 90° einschließen und/oder die Projektion der Handgelenkrotationsachse HR_{HGV,3} auf die durch Handgelenkrotationsachsen HR_{HGV,1} und HR_{HGV,2} aufgespannte Ebene mit der Handgelenkrotationsachse HR_{HGV,2} einen Winkel von 90° einschließen.

Eine vorteilhafte Weiterbildung des Roboterhandgelenks zeichnet sich dadurch aus, dass das Roboterhandgelenk derart ausgeführt ist, dass die Handgelenkverbindungen HGV₁, HGV₂, HGV₃, die Handgelenkglieder HGL₁ und HGL₂ sowie der an der Handgelenkverbindung HGV₃ montierte Effektor E derart ausgebildet ist, dass eine Bewegung des Handgelenkglieds HGL₂ und des Effektors E um die Handgelenkrotationsachse HR_{HGV,2} in allen Posen des Roboterarms ungehindert möglich ist.

Eine vorteilhafte Weiterbildung des Roboterhandgelenks zeichnet sich dadurch aus, dass das Roboterhandgelenk derart ausgeführt ist, dass die Handgelenkverbindung HGV₃ zur Erfassung einer Kraft oder eines Drehmoments um Handgelenkrotationsachse HR_{HGV,3} ausgeführt ist und/oder die Handgelenkverbindung HGV₁ zur Erfassung einer Kraft oder eines Drehmoments um die Handgelenkrotationsachse HR_{HGV1} ausgeführt ist.

Vorteile des Roboterhandgelenks und vorteilhafte Weiterbildungen des Roboterhandgelenks ergeben sich durch eine sinngemäße und analoge Übertragung der in Zusammenhang mit dem vorgeschlagenen Roboterarm gemachten vorstehenden Ausführungen.

Die Erfindung betrifft schließlich einen Roboter mit einem Roboterarm, wie vorstehend beschrieben.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen stark schematisierten Aufbau eines erfindungsgemäßen Roboterarms mit sechs Freiheitsgraden (N=6), und
- Fig. 2: einen stark schematisierten Aufbau eines erfindungsgemäßen Roboterhandgelenks,
- Fig. 3: eine Darstellung einer Ausführungsform eines erfindungsgemäßen Roboterhandgelenks an einem Roboterarm.

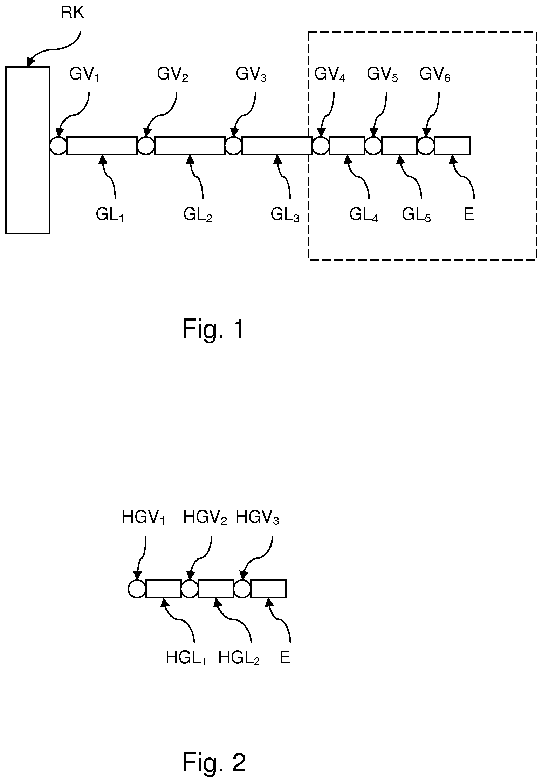

**Fig.** 1 zeigt einen stark schematisierten Aufbau eines erfindungsgemäßen Roboterarms mit sechs Freiheitsgraden. Der Roboterarm weist sechs aktorisch antreibbare Gelenkverbindungen GVₙ auf, die über Armglieder GLᵢ seriell verbunden sind, mit n = 1, 2, ..., 6, und i = 1, 2, ..., 5. Das proximale Armglied GL₁ des Roboterarms ist über die Gelenkverbindung GV₁ mit einem Roboterkörper RK verbunden. Das distale Armglied GL₅ des Roboterarms ist über die Gelenkverbindung GV₆ mit einem Effektor E verbunden. Der Effektor E kann direkt an der Gelenkverbindung GV₆ oder an einem mit der Gelenkverbindung GV₆ verbundenen Adapter angeordnet sein. Jede der Gelenkverbindungen GV₄, GV₅, GV₆ erlaubt eine Bewegung um eine zugeordnete Rotationsachse R_{GV,4}, R_{GV,5}, R_{GV,6}. Der gestrichelt umrandete Teil des Roboterarms bildet das Roboterhandgelenk. Die Armglieder GL₁, GL₂ und GL₃ haben eine gegenüber den Armgliedern GL₄, GL₅ und dem Effektor E eine größere Längserstreckung.

Fig. 2 zeigt einen stark schematisierten Aufbau eines erfindungsgemäßen Roboterhandgelenks mit drei aktorisch antreibbaren Handgelenkverbindungen HGVₙ, die über zwei Handgelenkglieder HGLᵢ seriell verbunden sind, mit n = 1, 2, 3 und i = 1, 2. Das proximale Handgelenkglied HGL₁ des Roboterhandgelenks über die Handgelenkverbindung HGV₁ mit einem Roboterarm verbunden. Das distale Handgelenkglied HGL₂ des Roboterhandgelenks ist über die Handgelenkverbindung HGV₃ mit einem Effektor E verbunden. Die Handgelenkglieder HGL₂ und HGL₁ sind über die Handgelenkverbindung HGV₂ verbunden. Jede der Handgelenkverbindungen HGV₁, HGV₂, HGV₃ erlaubt eine Bewegung um eine zugeordnete Handgelenkrotationsachse HR_{GV,1}, HR_{GV,2}, HR_{GV,3} und somit ein dreidimensionale Ausrichtung des Effektors E im Raum.

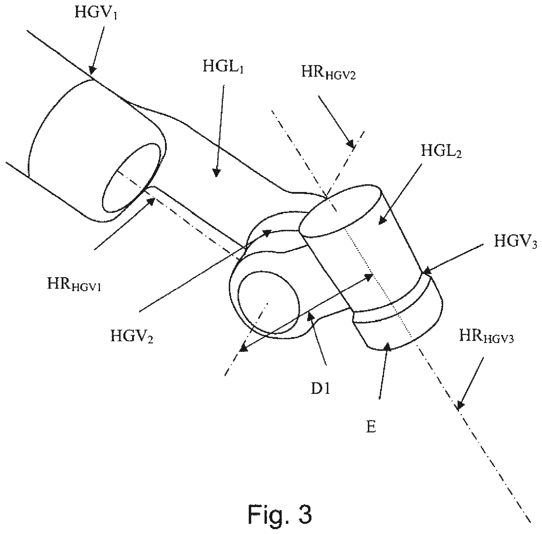

Fig. 3 zeigt eine Darstellung einer Ausführungsform eines erfindungsgemäßen Roboterhandgelenks an einem Roboterarm. Das dargestellte Roboterhandgelenk umfasst drei aktorisch antreibbare Handgelenkverbindungen HGV₁, HGV₂ und HGV₃ die über zwei Handgelenkglieder HGL₁, und HGL₂ seriell verbunden sind. Das proximale Handgelenkglied HGL₁ des Roboterhandgelenks ist über die Handgelenkverbindung HGV₁ mit einem Roboterarm verbunden. Das distale Handgelenkglied HGL₂ des Roboterhandgelenks ist über die Handgelenkverbindung HGV₃ mit einem Effektor E verbindbar (nicht dargestellt). Die Handgelenkglieder HGL₂ und HGL₁ sind über die Handgelenkverbindung HGV₂ verbunden. Jede der Handgelenkverbindungen HGV₁, HGV₂, HGV₃ erlaubt eine Bewegung um eine zugeordnete Handgelenkrotationsachse HR_{HGV,1}, HR_{HGV,2}, HR_{HGV,3} und somit ein dreidimensionale Ausrichtung des Effektors E im Raum.

Das Roboterhandgelenk ist derart ausgeführt, dass sich die Handgelenkrotationsachsen HR_{HGV,1} und HR_{HGV,2} in einem Winkel im Bereich von 90° schneiden, und die Handgelenkrotationsachse HR_{HGV,3} für jede beliebe Konfiguration des Roboterhandgelenks radial einen konstanten Abstand D1 zur Handgelenkrotationsachse HR_{HGV,2} aufweist. Weiterhin ist in allen der Handgelenkverbindungen HGV₁, HGV₂ und HGV₃ ein Sensor zur Erfassung einer Kraft oder eines Drehmoments um die jeweilige Handgelenkrotationsachse HR_{HGV,1}, HR_{HGV,2}, HR_{HGV,3}, vorhanden.

## Patentansprüche

1. Roboterarm mit einer Anzahl N von aktorisch antreibbaren Gelenkverbindungen GVₙ, die über Armglieder GLᵢ seriell verbunden sind, mit n = 1, 2, ..., N, und i = 1, 2, ..., N-1, und N ≥ 6, wobei
- das proximale Armglied GL₁ des Roboterarms über die Gelenkverbindung GV₁ mit einem Roboterkörper RK verbindbar ist,
- das distale Armglied GL_{N-1} des Roboterarms über die Gelenkverbindung GV_{N} mit einem Effektor E verbindbar ist,
- die Armglieder GL_{N-1} und GL_{N-2} über die Gelenkverbindung GV_{N-1} und die Armglieder GL_{N-2} und GL_{N-3} über die Gelenkverbindung GV_{N-2}, verbunden sind, und
- jede der Gelenkverbindungen GV_{N}, GV_{N-1}, GV_{N-2} eine Bewegung um eine zugeordnete Rotationsachse R_{GV,N}, R_{GV,N-1}, R_{GV,N-2} erlaubt, wobei der Roboterarm derart ausgeführt ist, dass
- die Rotationsachsen R_{GV,N-2} und R_{GV,N-1} sich in einem Winkel im Bereich von 50 bis 130° schneiden,
- die Rotationsachse R_{GV,N} radial in einem konstanten Abstand D1 zur Rotationsachse R_{GV,N-1} angeordnet ist, und
**dadurch gekennzeichnet, dass** der Roboterarm derart ausgeführt ist, dass
- die Gelenkverbindung GV_{N-1} zur Erfassung einer Kraft oder eines Drehmoments um die Rotationsachse R_{GV,N-1} eingerichtet ist.

2. Roboterarm nach Anspruch 1,
**dadurch gekennzeichnet, dass** der Roboterarm derart ausgeführt ist, dass eine Projektion der Rotationsachse R_{GV,N} auf eine durch Rotationsachsen R_{GV,N-2} und R_{GV,N-1} aufgespannte Ebene mit der Rotationsachse R_{GV,N-1} einen Winkel im Bereich von 50 bis 130° zueinander einschließen.

3. Roboterarm nach Anspruch 1 oder 2,
**dadurch gekennzeichnet, dass** die Rotationsachsen R_{GV,N-2} und R_{GV,N-1} einen Winkel von 90° einschließen und/oder die Projektion der Rotationsachse R_{GV,N} auf die durch Rotationsachsen R_{GV,N-2} und R_{GV,N-1} aufgespannte Ebene mit der Rotationsachse R_{GV,N-1} einen Winkel von 90° einschließen.

4. Roboterarm nach einem der Ansprüche 1 bis 3,
**dadurch gekennzeichnet, dass** der Abstand D1 im Bereich von 1 bis 50 cm gewählt ist.

5. Roboterarm nach einem der Ansprüche 1 bis 4,
**dadurch gekennzeichnet, dass** der Abschnitt des Roboterarms umfassend die Gelenkverbindungen GV_{N-2}, GV_{N-1} und GV_{N}, die Armglieder GL_{N-2} und GL_{N-1} sowie der an die Gelenkverbindung GV_{N} montierte Effektor E derart ausgebildet ist, dass eine Bewegung der Armglieder GL_{N-1} und des Effektors E um die Rotationsachse R_{GV,N-1} in allen Posen des Roboterarms ungehindert möglich ist.

6. Roboterarm nach einem der Ansprüche 1 bis 5,
**dadurch gekennzeichnet, dass** die Gelenkverbindung GV_{N} zur Erfassung einer Kraft oder eines Drehmoments um Rotationsachse R_{GV,N} eingerichtet ist und/oder die Gelenkverbindung GV_{N-2} zur Erfassung einer Kraft oder eines Drehmoments um Rotationsachse R_{GV,N-2} eingerichtet ist.

7. Roboterarm nach einem der Ansprüche 1 bis 6,
**dadurch gekennzeichnet, dass** der Roboterarm derart ausgeführt ist, dass
- sich die Rotationsachsen R_{GV1} und R_{GV2} in einem Winkel im Bereich von 50 bis 130° schneiden,
- sich die Rotationsachsen R_{GV2} und R_{GV3} in einem Winkel im Bereich von 50 bis 130° schneiden,
- die Rotationsachse R_{GV4} radial in einem konstanten Abstand D2 zur Rotationsachse R_{GV3} angeordnet ist, und
- sich die Rotationsachsen R_{GV4} und R_{GV5} in einem Winkel im Bereich von 50 bis 130° schneiden.

8. Roboterarm nach einem der Ansprüche 1 bis 6,
**dadurch gekennzeichnet, dass** der Roboterarm derart ausgeführt ist, dass
- sich die Rotationsachsen R_{GV1} und R_{GV2} in einem Winkel im Bereich von 50 bis 130° schneiden,
- sich die Rotationsachsen R_{GV2} und R_{GV3} in einem Winkel im Bereich von 50 bis 130° schneiden,
- sich die Rotationsachsen R_{GV3} und R_{GV4} in einem Winkel im Bereich von 50 bis 130° schneiden
- die Rotationsachse R_{GV5} radial in einem Abstand D3 zur Rotationsachse R_{GV4} angeordnet ist.

9. Roboterarm nach einem der Ansprüche 1 bis 6,
**dadurch gekennzeichnet, dass** der Roboterarm derart ausgeführt ist, dass
- sich die Rotationsachsen R_{GV1} und R_{GV2} in einem Winkel im Bereich von 50 bis 130° schneiden,
- sich die Rotationsachsen R_{GV2} und R_{GV3} in einem Winkel im Bereich von 50 bis 130° schneiden,
- die Rotationsachse R_{GV4} radial in einem konstanten Abstand D4 zur Rotationsachse R_{GV3} angeordnet ist,
- die Rotationsachse R_{GV5} radial in einem Abstand D5 zur Rotationsachse R_{GV4} angeordnet ist.

10. Roboterhandgelenk mit drei aktorisch antreibbaren Handgelenkverbindungen HGVₙ, die über zwei Handgelenkglieder HGLᵢ seriell verbunden sind, mit n = 1, 2, 3 und i = 1, 2, wobei
- das proximale Handgelenkglied HGL₁ des Roboterhandgelenks über die Handgelenkverbindung HGV₁ mit einem Roboterarm verbindbar ist,
- das distale Handgelenkglied HGL₂ des Roboterhandgelenks über die Handgelenkverbindung HGV₃ mit einem Effektor E verbindbar ist,
- die Handgelenkglieder HGL₂ und HGL₁ über die Handgelenkverbindung HGV₂ verbunden sind, und
- jede der Handgelenkverbindungen HGV₁, HGV₂, HGV₃ eine Bewegung um eine zugeordnete Handgelenkrotationsachse HR_{HGV,1}, HR_{HGV,2}, HR_{HGV,3} erlaubt, wobei das Roboterhandgelenk derart ausgeführt ist, dass sich
- die Handgelenkrotationsachsen HR_{HGV,1} und HR_{HGV,2} in einem Winkel im Bereich von 50 bis 130° schneiden,
- die Handgelenkrotationsachse HR_{HGV,3} radial in einem konstanten Abstand D1 zur Handgelenkrotationsachse HR_{HGV,2} angeordnet ist, und
**dadurch gekennzeichnet, dass** das Roboterhandgelenk derart ausgeführt ist, dass
- die Handgelenkverbindung HGV₂ zur Erfassung einer Kraft oder eines Drehmoments um Handgelenkrotationsachse HR_{HGV,2} ausgeführt ist.

11. Roboterhandgelenk nach Anspruch 10,
**dadurch gekennzeichnet, dass** das Roboterhandgelenk derart ausgeführt ist, dass eine Projektion der Handgelenkrotationsachse HR_{HGV,3} auf eine durch die Handgelenkrotationsachsen HR_{HGV,1} und HR_{HGV,2} aufgespannte Ebene mit der Handgelenkrotationsachse HR_{HGV,2} einen Winkel im Bereich von 50 bis 130° zueinander einschließen.

12. Roboterhandgelenk nach Anspruch 10 oder 11,
**dadurch gekennzeichnet, dass** die Handgelenkrotationsachsen HR_{HGV,1} und HR_{HGV,2} einen Winkel von 90° einschließen und/oder die Projektion der Handgelenkrotationsachse HR_{HGV,3} auf die durch Handgelenkrotationsachsen HR_{HGV,1} und HR_{HGV,2} aufgespannte Ebene mit der Handgelenkrotationsachse HR_{HGV,2} einen Winkel von 90° einschließen.

13. Roboterhandgelenk nach einem der Ansprüche 10 bis 12,
**dadurch gekennzeichnet, dass** die Handgelenkverbindungen HGV₁, HGV₂, HGV₃, die Handgelenkglieder HGL₁ und HGL₂ sowie der an der Handgelenkverbindung HGV₃ montierte Effektor E derart ausgebildet ist, dass eine Bewegung des Handgelenkglieds HGL₂ und des Effektors E um die Handgelenkrotationsachse HR_{HGV,2} in allen Posen des Handgelenks ungehindert möglich ist.

14. Roboterhandgelenk nach einem der Ansprüche 10 bis 13,
**dadurch gekennzeichnet, dass** die Handgelenkverbindung HGV₃ zur Erfassung einer Kraft oder eines Drehmoments um Handgelenkrotationsachse HR_{HGV,3} ausgeführt ist und/oder die Handgelenkverbindung HGV₁ zur Erfassung einer Kraft oder eines Drehmoments um die Handgelenkrotationsachse HR_{HGV,1} ausgeführt ist.

15. Roboter mit einem Roboterarm nach einem der Ansprüche 1 bis 9 oder einem Roboterhandgelenk nach einem der Ansprüche 10 bis 14.

## Claims

1. Robotic arm with a number of N of actuator-driven articulated joints GVₙ,
which are serially connected via arm members GL₁, with n = 1, 2,..., N, and i = 1, 2,..., N-1, and N ≥ 6, wherein
- the proximal arm member GL₁ of the robotic arm via the articulated joint GV, can be connected to a robot body RK,
- the distal arm member GL_{N-1} of the robotic arm is connectable via the articulated joint GV_{N} with an effector E,
- arm members GL_{N-1} and GL_{N-2} are connected via the articulated joint GV_{N-1} and arm members GL_{N-2} and GL_{N-3} are connected via a the articulated joint GV_{N- 2}, and
- each of the articulated joints GV_{N}, GV_{N-1}, GV_{N-2} a allow for a movement around an associated rotational axis R_{GV,N}, R_{GV,N-1}, R_{GV,N-2}.
wherein
the robotic arm is designed in such a way that
- the rotational axes R_{GV,N-2} and R_{GV,N-1} intersect at an angle within a range of 50 to 130°.
- the rotational axis R_{GV,N} is radially arranged at a constant distance D1 to the rotational axis R_{GV,N- 1}, and
is **characterized in that** the robotic arm is designed in such a way that
- the articulated joint GV_{N-1} is set up to detect a force or torque around the rotational axis R_{GV,N-1}.

2. Robotic arm according to Claim 1,
**characterized in that** the robotic arm is designed in such a way that a projection of the rotational axis R_{GV,N} on a plane spanned by rotational axes R_{GV,N-2} and R_{GV,N-1} along with the rotational axis R_{GV,N-1} form an angle within a range of 50 to 130° to one another.

3. Robotic arm according to Claim 1 or 2,
**characterized in that** the rotational axes R_{GV,N-2} and R_{GV,N- 1} are at an angle of 90° and/or the projection of the rotational axis R_{GV,N} on the plane spanned by rotational axes R_{GV,N-2} and R_{GV,N-1} along with the rotational axis R_{GV,N- 1} form a 90° angle.

4. Robotic arm according to one of the Claims 1 to 3,
**characterized in that** the distance D1 is selected within a range of 1 to 50 cm.

5. Robotic arm according to one of the Claims 1 to 4,
**characterized in that** the section of the robotic arm comprising the articulated joints GV_{N-2}, GV_{N-1} und GV_{N}, the arm members GL_{N-2} and GL_{N-1}, as well as the effector E mounted to the articulated joint GV_{N} is designed in such a way that a movement of the arm members GL_{N-1} and the effector E around the rotational axis R_{GV,N-1} is possible in all poses of the robotic arm in an unobstructed manner.

6. Robotic arm according to one of the Claims 1 to 5,
**characterized in that** the articulated joint GV_{N} is set up to detect a force or a torque around rotational axis R_{GV,N} and/or the articulated joint GV_{N-2} is set up to detect a force or a torque around rotational axis R_{GV,N-} 2.

7. Robotic arm according to one of the Claims 1 to 6,
**characterized in that** the robotic arm is designed in such a way that
- the rotational axes R_{GV1} and R_{GV2} intersect at an angle within a range of 50 to 130°.
- the rotational axes R_{GV2} and R_{GV3} intersect at an angle within a range of 50 to 130°.
- the rotational axis R_{GV4} is radially arranged at a constant distance D2 to the rotational axis R_{GV3}, and
- the rotational axes R_{GV4} and R_{GV5} intersect at an angle within a range of 50 to 130°.

8. Robotic arm according to one of the Claims 1 to 6,
**characterized in that** the robotic arm is designed in such a way that
- the rotational axes R_{GV1} and R_{GV2} intersect at an angle within a range of 50 to 130°.
- the rotational axes R_{GV2} and R_{GV3} intersect at an angle within a range of 50 to 130°.
- the rotational axes R_{GV3} and R_{GV4} intersect at an angle within a range of 50 to 130°.
- the rotational axis R_{GV5} is radially arranged at a distance D3 to the rotational axis R_{GV4}.

9. Robotic arm according to one of the Claims 1 to 6,
**characterized in that** the robotic arm is designed in such a way that
- the rotational axes R_{GV1} and R_{GV2} intersect at an angle within a range of 50 to 130°.
- the rotational axes R_{GV2} and R_{GV3} intersect at an angle within a range of 50 to 130°.
- the rotational axis R_{GV4} is radially arranged at a constant distance D4 to the rotational axis R_{GV3},
- the rotational axis R_{GV5} is radially arranged at a distance D5 to the rotational axis R_{GV4}.

10. Robotic wrist with three actuator-driven wrist joints HGVₙ, which are serially connected via two wrist members HGL₁, with n = 1, 2, 3 and i = 1, 2, wherein
- the proximal wrist member HGL₁ of the robotic wrist can be connected to a robotic arm via the wrist joint HGV₁,
- the distal wrist member HGL₂ of the robotic wrist is connectable via a wrist joint HGV₃ with an effector E,
- the wrist members HGL₂ and HGL₁ are connected via a wrist joint HGV₂, and
- each of the wrist joints HGV₁, HGV₂, HGV₃ allows for a movement around an associated wrist rotational axis HR_{HGV,1}, HR_{HGV,2}, HR_{HGV,3},
wherein
the robotic wrist is designed in such a way that
- the wrist rotational axes HR_{HGV,1} und HR_{HGV,2} intersect at an angle within a range of 50 to 130°.
- the wrist rotational axis HR_{HGV,3} is radially arranged at a constant distance D1 to the wrist rotational axis HR_{HGV,2}, and
**characterized in that** the robotic wrist is designed in such a way that
- the wrist joint HGV₂ is designed to detect a force or torque around wrist rotational axis HR_{HGV,2}.

11. Robotic wrist according to Claim 10,
**characterized in that** the robotic wrist is designed in such a way that a projection of the wrist rotational axis HR_{HGV,3} on a plane spanned by the wrist rotational axes HR_{HGV,1} and HR_{HGV,2} along with the wrist rotational axis HR_{HGV,2} form an angle within a range of 50 to 130° to one another.

12. Robotic wrist according to Claim 10 or 11,
**characterized in that** the wrist rotational axes HR_{HGV,1} and HR_{HGV,2} form a 90° angle and/or the projection of the wrist rotational axis HR_{HGV,3} on the plane spanned by wrist rotational axes HR_{HGV,1} and HR_{HGV,2} along with wrist rotational axis HR_{HGV,2} form a 90° angle.

13. Robotic wrist according to any one of claims 10 to 12,
**characterized in that** the wrist joints HGV₁, HGV₂, HGV₃, the wrist members HGL₁ and HGL₂, as well as the effector E mounted on the wrist joint HGV₃ is designed in such a way that a movement of the wrist member HGL₂ and the effector E around the wrist rotational axis HR_{HGV,2} is possible in all poses of the wrist in an unobstructed manner.

14. Robotic wrist according to any one of claims 10 to 13,
**characterized in that** the wrist joint HGV₃ is designed to detect a force or torque around wrist rotational axis HR_{HGV,3} and/or the wrist joint HGV₁ is designed to detect a force or torque around the wrist rotational axis HR_{HGV,1}.

15. Robot with a robotic arm according to any one of Claims 1 to 9 or a robotic wrist according to any one of Claims 10 to 14.

## Revendications

1. Bras de robot avec un nombre « N » de liaisons articulées GVₙ pouvant être entraînées par actionneur, lesquelles sont reliées en série par le biais d'éléments de bras GL, où n = 1,2,....,N et i = 1,2,...,N-1 et N ≥ 6, sachant que
- l'élément de bras proximal GL₁ du bras de robot peut être relié à un corps de robot RK par la liaison articulée GV,
- l'élément de bras distal GL_{N-1} du bras de robot peut être relié à un effecteur E par le biais de la liaison articulée GV_{N},
- les éléments de bras GL_{N-1} et GL_{N-2} sont reliés par le biais de la liaison articulée GV_{N-1} et les éléments de bras GL_{N-2} et GL_{N-3} sont reliés par le biais de la liaison articulée GV_{N-2} et
- chacune des liaisons articulées GV_{N}, GV_{N-1}, GV_{N-2} permet un mouvement autour d'un axe de rotation associé R_{GV,N}, R_{GV,N-1}, R_{GV,N-2},
sachant que
le bras de robot est réalisé de telle manière que
- les axes de rotation R_{GV,N-2} et R_{GV,N-1} se croisent suivant un angle se situant dans une plage de 50 à 130°,
- l'axe de rotation R_{GV.N} est disposé radialement à une distance constante D1 par rapport à l'axe de rotation R_{GV,N-1} et
**caractérisé en ce que** le bras de robot est réalisé de telle manière que
- la liaison articulée GV_{N-1} est agencée pour la saisie d'une force ou d'un couple autour de l'axe de rotation R_{GV,N-1}.

2. Bras de robot selon la revendication 1,
**caractérisé en ce que** le bras de robot est réalisé de telle manière qu'une projection de l'axe de rotation R_{GV.N} sur un plan étendu par des axes de rotation R_{GV.N-2} et R_{GV.N-1} forment entre eux avec l'axe de rotation R_{GV.N- 1}, un angle se situant dans la plage de 50 à 130°.

3. Bras de robot selon la revendication 1 ou 2,
**caractérisé en ce que** les axes de rotation R_{GV,N-2} et R_{GV,N-1} forment un angle de 90° et/ou la projection de l'axe de rotation R_{GV,N} sur le plan étendu par les axes de rotation R_{GV,N-2} et R_{GV,N-1} forment avec l'axe de rotation R_{GV,N-1}, un angle de 90° .

4. Bras de robot selon l'une quelconque des revendications 1 à 3,
**caractérisé en ce que** la distance D1 est choisie dans une plage de 1 à 50 cm.

5. Bras de robot selon l'une quelconque des revendications 1 à 4,
**caractérisé en ce que** la section du bras de robot comprenant les liaisons articulées GV_{N-2}, GV_{N-1} et GV_{N}, les éléments de bras GL_{N-2} et GL_{N-1} ainsi que l'effecteur E monté sur la liaison articulée GV_{N}, est constituée de telle manière qu'un mouvement des éléments de bras GL_{N- 1} et de l'effecteur E autour de l'axe de rotation R_{GV.N-1} est librement possible dans toutes les poses du bras de robot.

6. Bras de robot selon l'une quelconque des revendications 1 à 5,
**caractérisé en ce que** la liaison articulée GV_{N} est agencée pour la saisie d'une force ou d'un couple autour de l'axe de rotation R_{GV,N} et/ou la liaison articulée GV_{N- 2} est agencée pour la saisie d'une force ou d'un couple autour de l'axe de rotation R_{GV,N-2}.

7. Bras de robot selon l'une quelconque des revendications 1 à 6,
**caractérisé en ce que** le bras de robot est réalisé de telle manière que
- les axes de rotation R_{GV1} et R_{GV2} se croisent suivant un angle se situant dans une plage de 50 à 130°,
- les axes de rotation R_{GV2} et R_{GV3} se croisent suivant un angle se situant dans une plage de 50 à 130°,
- l'axe de rotation R_{GV4} est disposé radialement à une distance constante D2 par rapport à l'axe de rotation R_{GV3} et
- les axes de rotation R_{GV4} et R_{GV5} se croisent suivant un angle se situant dans une plage de 50 à 130°.

8. Bras de robot selon l'une quelconque des revendications 1 à 6,
**caractérisé en ce que** le bras de robot est réalisé de telle manière que
- les axes de rotation R_{GV1} et R_{GV2} se croisent suivant un angle se situant dans une plage de 50 à 130°,
- les axes de rotation R_{GV2} et R_{GV3} se croisent suivant un angle se situant dans une plage de 50 à 130°,
- les axes de rotation R_{GV3} et R_{GV4} se croisent suivant un angle se situant dans une plage de 50 à 130°,
- l'axe de rotation R_{GV5} est disposé radialement à une distance constante D3 par rapport à l'axe de rotation R_{GV4} .

9. Bras de robot selon l'une quelconque des revendications 1 à 6,
**caractérisé en ce que** le bras de robot est réalisé de telle manière que
- les axes de rotation R_{GV1} et R_{GV2} se croisent suivant un angle se situant dans une plage de 50 à 130°,
- les axes de rotation R_{GV2} et R_{GV3} se croisent suivant un angle se situant dans une plage de 50 à 130°,
- l'axe de rotation R_{GV4} est disposé radialement à une distance constante D4 par rapport à l'axe de rotation R_{GV3},
- l'axe de rotation R_{GV5} est disposé radialement à une distance D5 par rapport à l'axe de rotation R_{GV4}.

10. Poignet de robot avec trois liaisons de poignet HGVₙ pouvant être entraînées par actionneur, lesquelles sont reliées en série par deux éléments de poignet HGL, où n = 1,2, 3 et i = 1,2, sachant que
- l'élément de poignet proximal HGL du poignet de robot peut être relié à un bras de robot par le biais de la liaison de poignet HGV₁,
- l'élément de poignet distal HGL du poignet de robot peut être relié à un effecteur E par le biais de la liaison de poignet HGV₃,
- les éléments de poignet HGL₂ et HGL₁ sont reliés par le biais de la liaison de poignet HGV₂, et
- chacune des liaisons de poignet HGV₁, HGV₂ HGV₃ permet un mouvement autour d'un axe de rotation de poignet associé HR_{HGV,1}, HR_{HGV,2}, HR_{HGV,3},
sachant que
le poignet de robot est réalisé de telle manière que
- les axes de rotation de poignet HR_{HGV.1} et HR_{HGV.2} se croisent suivant un angle se situant dans une plage de 50 à 130°,
- l'axe de rotation de poignet HR_{HGV.3} est disposé radialement à une distance constante D1 par rapport à l'axe de rotation de poignet HR_{HGV.2} et
**caractérisé en ce que** le poignet de robot est réalisé de telle manière que
- la liaison de poignet HGV₂ est réalisée pour la saisie d'une force ou d'un couple autour de l'axe de rotation de poignet HR_{HGV,2}.

11. Poignet de robot selon la revendication 10,
**caractérisé en ce que** le poignet de robot est réalisé de telle manière qu'une projection de l'axe de rotation de poignet HR_{HGV.3} sur un plan étendu par les axes de rotation de poignet HR_{HGV.1} et HR_{HGV.2} forme entre eux avec l'axe de rotation de poignet HR_{HGV.2}, un angle se situant dans une plage de 50 à 130°.

12. Poignet de robot selon la revendication 10 ou 11,
**caractérisé en ce que** les axes de rotation de poignet HR_{HGV,1} et HR_{HGV,2} forment un angle de 90° et/ou la projection de l'axe de rotation de poignet HR_{HGV,3} sur le plan étendu par les axes de rotation de poignet HR_{HGV,1} et HR_{HGV,2} forme avec l'axe de rotation de poignet HR_{HGV,2} un angle de 90°.

13. Poignet de robot selon l'une quelconque des revendications 10 à 12,
**caractérisé en ce que** les liaisons de poignet HGV₁, HGV₂, HGV₃, les éléments de poignet HGL₁, et HGL₂ ainsi que l'effecteur E monté sur la liaison de poignet HGV₃ sont constitués de telle manière qu'un mouvement de l'élément de poignet HGL₂ et de l'effecteur E autour de l'axe de rotation de poignet HR_{HGV,2} est librement possible dans toutes les poses du poignet.

14. Poignet de robot selon l'une quelconque des revendications 10 à 13,
**caractérisé en ce que** la liaison de poignet HGV₃ est réalisée pour la saisie d'une force ou d'un couple autour de l'axe de rotation de poignet HR_{HGV,3} et/ou la liaison de poignet HGV₁ est réalisée pour la saisie d'une force ou d'un couple au tour de l'axe de rotation de poignet HR_{HGV,1}.

15. Robot avec un bras de robot selon l'une quelconque des revendications 1 à 9 ou une articulation de poignet de robot selon l'une quelconque des revendications 10 à 14.
